# EUROPÄISCHE PATENTANMELDUNG

(11) **EP 1 223 488 A1**
(43) Veröffentlichungstag der Anmeldung: **17.07.2002**
(21) Anmeldenummer: 01100514.7
(22) Anmeldetag: 09.01.2001
(51) Int. Cl.: G05B 19/418

(54) **Verfahren zum Entwickeln eines Produkts mit Qualitätsmerkmalen**

(71) Anmelder: SIEMENS AKTIENGESELLSCHAFT, 80333 München (DE)
(72) Erfinder: Diehl, Michael, 80997 Muenchen (DE)

(57) **Zusammenfassung**

Die Erfindung betrifft ein Verfahren, bei dem für ein zu entwickelndes Produkt (20) mindestens zwei Komponenten (22 bis 30) definiert werden, die in dem Produkt (20) enthalten sein sollen. In einem Prüfvorgang wird für jede Komponente (22 bis 30) überprüft, ob mit den für diese Komponente (22 bis 30) ermittelten Komponenten-Qualitätskennwerten die für das Produkt festgelegten Produkt-Qualitätskennwerte auch bei einer Kombination dieser Komponente (22 bis 30) mit weiteren Komponenten (22 bis 30) erreicht werden. Bei einem negativen Prüfergebnis wird die Komponente (22 bis 30) modifiziert und der Prüfvorgang wiederholt.

## Beschreibung

Die Erfindung betrifft ein Verfahren zum Entwickeln eines Produkts unter Berücksichtigung von festzulegenden Qualitätsmerkmalen des Produkts. Für das zu entwickelnde Produkt werden Vertriebskennwerte festgelegt, die zumindest die vorgesehene Vertriebsregion betreffen. Bei dem Verfahren werden weiterhin die durch das Produkt zu erfüllenden Produkt-Qualitätskennwerte festgelegt, wobei die sich aus den Vertriebskennwerten ergebenden Vorschriften und Richtlinien berücksichtigt werden. Es werden mindestens zwei Komponenten für das Produkt definiert, die in dem Produkt enthalten sein sollen.

Um Produkte vertreiben zu können, ist es notwendig, dass diese Produkte die gesetzlichen Vorschriften und Richtlinien erfüllen, die in der jeweiligen Vertriebsregion gelten. Sollen die Produkte an Kunden vertrieben werden, die eigene Anforderungen und Richtlinien an solche Produkte stellen, ist es notwendig, dass das jeweilige Produkt auch diese Vorschriften und Richtlinien erfüllt. Solche Anforderungen können z.B. Unfallverhütungsvorschriften, Kfz-Zulassungsbestimmungen, Anforderungen an das Brandverhalten, an die Erdbebensicherheit und an die elektromagnetische Verträglichkeit (EMV), Sicherheitsvorschriften, Werksnormen sowie Umweltschutzvorschriften sein.

Um z.B. in Deutschland Bildschirme von Personalcomputern an Bildschirmarbeitsplätzen einsetzen zu können, muss der Bildschirm die in den international anerkannten TCO-Normen der schwedischen Zentralorganisation für Beamte und Angestellte festgelegten Kennwerte erfüllen, da die Einhaltung der TCO-Normen auch in Deutschland vorgeschrieben ist. Auch ist ein solcher Bildschirm einem CE-Prüfverfahren zu unterziehen, bei dem der Bildschirm auf elektromagnetische Verträglichkeit und Störfestigkeit überprüft wird.

Weiterhin sollte der Bildschirm von der entsprechenden Berufsgenossenschaft, dem VDE oder dem TÜV einer sogenannten GS-Prüfung unterzogen werden, wobei bei Einhaltung der Kennwerte der GS-Prüfung eine GS-Prüfplakette erteilt wird, die für die geprüfte Sicherheit des Gerätes bürgt. Ist der Betrieb des Bildschirms in einem Energiesparmodus vorgesehen, so sollte der Bildschirm die Normen und Vorgabe der amerikanischen Umweltbehörde EPA einhalten, die als internationaler Standard anerkannt sind und nach denen der Bildschirm im Energiesparmodus eine maximale Leistungsaufnahme von 30 Watt haben darf. Bei Einhaltung dieser Normen und Vorgaben erhält der Bildschirm die sogenannte Energystar-Prüfplakette.

Zum Umschalten des Monitors in den Energiesparmodus sollten die international geltenden DPMS(Display Power Management Signalling)-Normen und Vorgaben der VESA (Video Electronics Standard Association) berücksichtigt werden. Eine solche Standardisierung gewährleistet, dass das Energieverwaltungssystem des Bildschirms mit Hilfe einer Bildschirmansteuerplatine auch in den Energiesparmodus geschaltet werden kann, deren Ausgangssignale den DPMS-Normen und Vorgaben der VESA entsprechen. Die DPMS-Normen und Vorgaben beinhalten z.B. auch die Art und die Farbe und den Zustand einer Spannungsversorgungskontrollanzeige.

Soll ein solcher Bildschirm nicht nur in Deutschland, sondern auch in den USA vertrieben werden, so sind zusätzlich die in den USA geltenden UL-Bauvorschriften für elektronische Geräte zu berücksichtigen. Soll jedoch ein solcher Bildschirm in einem Gebiet mit subtropischem Klima vertrieben und eingesetzt werden, so sind die erhöhten Anforderungen an die klimatische Resistenz des Bildschirms, insbesondere an die erhöhte Luftfeuchtigkeit und Temperatur der Umgebung, bei der Entwicklung des Bildschirms zu berücksichtigen.

Bei der Entwicklung von Klimaanlagen für Kraftfahrzeuge ist z.B. zu berücksichtigen, dass in bestimmten Vertriebsgebieten, z.B. in Deutschland, kein Kühlmittel eingesetzt werden darf, dass Fluorchlorkohlenwasserstoffe enthält.

Bei Einrichtungen zur Verschlüsselung von Daten sind z.B. in den USA andere Verschlüsselungsalgorithmen gesetzlich vorgeschrieben als in Indien. Ist die Art des Verschlüsselungsverfahrens für eine bestimmte Anwendung und/oder in einem Vertriebsgebiet nicht gesetzlich vorgeschrieben, können sie z.B. durch Richtlinien möglicher Kunden vorgeschrieben sein. Große Unternehmen und Konzerne haben eigene Vorschriften und Richtlinien, die von Lieferanten einzuhalten sind. So hat z.B. die Deutsche Telekom AG für Telekommunikationseinrichtungen eine eigene Richtlinie mit der Bezeichnung 1TR9. Aber auch in anderen Industriezweigen, wie z.B. der Chemieindustrie oder der Automobilindustrie sind sogenannte Werksnormen verbreitet, die Richtlinien und Normen beinhalten, die von Lieferanten einzuhalten sind.

Sollen die zu entwickelnden Produkte in Ländern eingesetzt und vertrieben werden, in denen es vorgeschrieben ist, dass die Komponenten des Produkts von einheimischen Herstellen hergestellt werden, so ist auch dies schon bei der Produktentwicklung zu berücksichtigen. So ist es z.B. üblich, dass bei staatseigenen Telefongesellschaften und bei öffentlichen Ausschreibungen der öffentlichen Hand Vorschriften gelten, die einheimische Hersteller für die eingesetzten Komponenten zwingend vorschreiben.

Bei bekannten Verfahren zur Qualitätssicherung von zu entwickelnden Produkten kommt es häufig vor, dass die fertig entwickelten Produkte nicht allen Qualitätsanforderungen entsprechen. Um dennoch alle Qualitätsanforderungen zu erfüllen, werden kostenintensive Nachbesserungen der Produkte bis hin zum Austausch ganzer Komponenten erforderlich.

Aufgabe der Erfindung ist es, ein Verfahren zum Entwickeln eines Produkts anzugeben, bei dem die Qualitätskennwerte des Produkts die maßgeblichen Vorschriften und Richtlinien erfüllen.

Diese Aufgabe wird für ein Verfahren zum Entwickeln eines Produkts mit den Merkmalen des Anspruchs 1 gelöst. Vorteilhafte Ausführungsformen der Erfindung werden in den abhängigen Ansprüchen angegeben.

Durch ein Verfahren mit den Merkmalen des Anspruchs 1 ist es möglich, dass die sich aus den Vertriebskennwerten ergebenden Vorschriften und Richtlinien schon bei der Produktentwicklung berücksichtigt werden.

Weiterhin wird durch dieses Verfahren jede Komponente des Produkts so geprüft, dass die sich aus den Vorschriften und Richtlinien ergebenden zu erfüllenden Produkt-Qualitätskennwerte auch bei einer Kombination dieser Komponente mit weiteren Komponenten erreicht werden. Schon bei der Entwicklung werden die Komponenten so modifiziert, dass sie die festgelegten Produkt-Qualitätskennwerte erfüllen. Eine Nachbesserung der Komponenten ist somit nach abgeschlossener Entwicklung des Produkts nicht notwendig, da die Kennwerte des entwickelten Produkts alle relevanten Vorschriften und Richtlinien bereits erfüllen. Auch kann durch dieses Verfahren bereits bei der Entwicklung des Produkts eine Entscheidung getroffen werden, ob für unterschiedliche Vertriebsregionen verschiedene Ausführungsformen des Produkts entwickelt werden sollen oder ob ein Produkt entwickelt wird, das alle Anforderungen, Vorschriften und Richtlinien erfüllt, die sich aus den festgelegten Vertriebskennwerten ergeben. Die Produkt-Qualitätskennwerte stellen Sollwerte dar und die aktuellen ermittelten Komponenten- und/oder Produkt-Qualitätskennwerte Istwerte. Mit Hilfe des Verfahrens gemäß Patentanspruch 1 wird ein Sollwert -Istwert Vergleich nach Art eines Regelkreises durchgeführt. Die Modifikation der jeweiligen Komponente bzw. der Komponenten ist die Stellgröße des Regelkreises. Die Regelung wird solange durchgeführt, bis die Istwerte die Sollwerte mindestens erreicht haben.

Bei einer Ausführungsform der Erfindung werden die Produkt-Qualitätskennwerte aus dem gegebenenfalls modifizierten Komponenten-Qualitätskennwerten unter Verwendung eines Auswertungsverfahrens ermittelt, wobei z.B. als Auswertungsverfahren empirische Schätzverfahren, mathematische Modelle und Simulationsverfahren verwendet werden. Wurden modifizierte Komponenten-Qualitätskennwerte ermittelt, so werden aus diesen die Produkt-Qualitätskennwerte unter Anwendung des Auswerteverfahrens ermittelt. Dadurch wird erreicht, dass Produkt-Qualitätskennwerte ermittelt werden, die mit den zu erfüllenden Produkt-Qualitätskennwerten verglichen werden können, wobei bei einem positiven Vergleichsergebnis das Produkt alle relevanten Vorschriften und Richtlinien erfüllt.

Bei einer weiteren Ausführungsform der Erfindung werden die Produkt-Qualitätskennwerte durch direktes Messen und/oder Prüfen am Produkt ermittelt. Gegenüber den aus den Komponenten-Qualitätskennwerten ermittelten Produkt-Qualitätskennwerte bieten die durch Messungen und/oder Prüfungen ermittelten Produkt-Qualitätskennwerte eine höhere Genauigkeit für die tatsächlich erreichten Produkt-Qualitätskennwerte.

Bei einer vorteilhaften Ausführungsform der Erfindung sind die Komponenten Hardwarekomponenten und/oder Softwarekomponenten. Somit ist gewährleistet, dass alle Produkt-Qualitätskennwerte, die von Hardwarekomponenten und/oder Softwarekomponenten beeinflusst werden, korrekt ermittelt sind.

Bei einer anderen Ausführungsform der Erfindung werden bei der Definition der Komponenten auch Qualitätskenngrößen mögliche Hersteller der einzelnen Komponenten berücksichtigt.

Solche Qualitätskenngrößen sind z.B. die Leistungsfähigkeit, die wirtschaftliche Situation und/oder die Qualität von hergestellten Produkten des jeweiligen Herstellers. Das Ermitteln der Qualitätskennwerte der Hersteller kann mit Hilfe eines Fragebogens durchgeführt werden, der auch Angaben über die festgelegten Produkt-Qualitätskennwerte für das zu entwickelnde Produkt enthält.

Der jeweilige mögliche Hersteller kann z.B. auf dem Fragebogen erklären, dass Möglichkeiten für Prüfungen vorhanden sind, die die Einhaltung der festgelegten Produkt-Qualitätskennwerte ausreichend belegen und dass er diese Prüfung bei einer Beauftragung durchführen wird. Somit ist gewährleistet, dass die durch diesen Hersteller hergestellte Komponente die festgelegten Produkt-Qualitätskennwerte erfüllt. Auch kann der Hersteller seine Bereitschaft erklären, bei einer Beauftragung zur Herstellung einer Komponente die notwendigen Prüfungen und gegebenenfalls notwendige Modifikationen der Komponente zum Erfüllen der festgelegten Produkt-Qualitätskennwerte durchzuführen.

Der jeweilige Hersteller sollte weiterhin vor Vertragsabschluß seine Bereitschaft erklären, eine Dokumentation der ermittelten Komponenten-Qualitätskennwerte und/oder der ermittelten Produkt-Qualitätskennwerte an den Auftraggeber zeitnah nach dem Ermitteln zu übergeben und die Weitergabe an Dritte, insbesondere an Endkunden, zu gestatten. Somit ist nicht nur die Einhaltung und die Erfüllung der festgelegten Produkt-Qualitätskennwerte sichergestellt, vielmehr kann die Einhaltung von Vorschriften und Richtlinien auch gegenüber Dritten, z.B. gegenüber Prüfämtern und Endkunden, dokumentiert werden.

Bei einer anderen vorteilhaften Ausführungsform der Erfindung benennt der mögliche Hersteller der Komponente mindestens einen Ansprechpartner, der beim Ermitteln der Produkt-Qualitätskennwerte zur Verfügung steht und die bei Bedarf das Ermitteln der Produkt-Qualitätskennwerte bei Nachprüfung und das Modifizieren der Komponente unterstützt. Dadurch ist gewährleistet, dass der Hersteller der Komponente das Erfüllen der festgelegten Produkt-Qualitätskennwerte aktiv unterstützt.

Bei einer weiteren Ausführungsform der Erfindung wird bei der Definition der Komponente und/oder beim Festlegen der möglichen Hersteller berücksichtigt, dass mindestens zwei Hersteller vorhanden sind, die die jeweilige Komponente herstellen können. Dadurch wird erreicht, dass bei Problemen mit einem Hersteller noch ein weiterer Hersteller vorhanden ist, der die jeweilige Komponente liefern kann. Eine Abhängigkeit von einem einzigen Hersteller ist somit ausgeschlossen. Auch lässt sich so bei Vertragsverhandlungen ein günstigeres Preis-Leistungs-Verhältnis erzielen.

Vorteilhaft ist es, wenn bei einer weiteren Ausführungsform der Erfindung ein Hersteller festgelegt wird, der für die Einhaltung der festgelegten Produkt-Qualitätskennwerte verantwortlich ist, falls die Komponenten des Produkts von mehr als einem Hersteller hergestellt werden sollen. Dadurch wird erreicht, dass die Verantwortlichkeiten klar definiert sind, wodurch Zuständigkeitsprobleme zwischen den einzelnen Herstellern vermieden werden.

Weiterhin ist vorteilhaft, dass zumindest die Einhaltung der festgelegten Produkt-Qualitätskennwerte und/oder die Einhaltung von Komponenten-Qualitätskennwerten, die sich für die jeweilige Komponente aus den Produkt-Qualitätskennwerten ergeben, vertraglich mit dem Hersteller der jeweiligen Komponente vereinbart ist. Dadurch wird erreicht, dass die Einhaltung der festgelegten Produkt-Qualitätskennwerte bzw. der sich aus den Produkt-Qualitätskennwerten für die jeweilige Komponente ergebenden Komponenten-Qualitätskennwerten ohne Mehrkosten gewährleistet ist.

Bei einer weiteren Ausführungsform der Erfindung werden die ermittelten Qualitätskennwerte durch ein akkreditiertes Prüflabor bestätigt. Dadurch wird erreicht, dass die Qualitätskennwerte mit einer ausreichenden Genauigkeit unter den in den Richtlinien und Vorschriften angeführten Bedingungen korrekt ermittelt sind. Somit ist die Anerkennung dieser ermittelten Werte auch von möglichen Kunden, Zulassungsstellen und Überwachungsvereinen gewährleistet.

Bei einer anderen Ausführungsform der Erfindung werden die Produkt-Qualitätskennwerte durch direkte Messung und/oder Prüfung dann nicht ermittelt, wenn sowohl die einzelnen Komponenten die festgelegten Produkt-Qualitätskennwerte erfüllen als auch eine gegenseitige Beeinflussung der Komponenten nicht zu erwarten ist. Dadurch wird erreicht, dass die Komponenten-Qualitätskennwerte der Komponente ermittelt werden, wobei nicht überprüft wird, ob die ermittelten Komponenten-Qualitätskennwerte die festgelegten Produkt-Qualitätskennwerte auch bei einer Kombination dieser Komponente mit der weiteren Komponente erreichen. Insbesondere bei Komponenten, bei denen eine gegenseitige Beeinflussung, die zum Überschreiten der festgelegten Produkt-Qualitätskennwerte führt, unwahrscheinlich oder ausgeschlossen ist, kann auf das aufwendige Ermitteln der Produkt-Qualitätskennwerte und/oder auf das aufwendige Ermitteln der Komponenten-Qualitätskennwerte unter Berücksichtigung der Einflüsse von anderen Komponenten verzichtet werden. Ein unverhältnismäßig hoher Arbeitsaufwand, Kostenaufwand und Zeitaufwand kann somit vermieden werden.

Vorteilhaft ist es auch, wenn beim Festlegen der Qualitätskennwerte Kennwerte zur CE-Kennzeichnung, zur UL-Zulassung, zur NEBS-Zulassung, landesspezifische Normen, insbesondere zur Erdbebensicherheit, zur zulässigen Brandlast sowie zur elektromagnetischen Verträglichkeit, Umweltschutzvorschriften und/oder spezielle Kundenanforderungen an Qualitätskennwerte berücksichtigt werden. Dadurch wird erreicht, dass die relevanten Vorschriften und Richtlinien schon bei der Produktentwicklung berücksichtigt werden.

Weiterhin ist es vorteilhaft, die sich für das Produkt aus den Komponenten-Qualitätskennwerten ergebenden und/oder die ermittelten Produkt-Qualitätskennwerte zu archivieren und/oder Zertifikate über die Einhaltung der Produkt-Qualitätskennwerte zu erstellen. Dadurch wird erreicht, dass die Einhaltung der Produkt-Qualitätskennwerte nachvollziehbar dokumentiert ist.

Bei einer vorteilhaften Ausführungsform der Erfindung werden von einer Komponente Komponenten-Qualitätskennwerte ermittelt, die mehrere Unterkomponenten enthält. Dadurch wird erreicht, dass die Komponenten-Qualitätskennwerte von Baugruppen, die Unterkomponenten enthalten, ermittelt werden können, aus denen das Produkt besteht.

Weitere Merkmale und Vorteile der Erfindung ergeben sich aus der folgenden Beschreibung, welche in Verbindung mit den beigefügten Zeichnungen die Erfindung an Hand von Ausführungsbeispielen erläutert. Darin zeigen:
- Figur 1: ein Blockschaltbild, in dem schematisch das Produkt mit den in dem Produkt enthaltenen Komponenten sowie mit den Einflüssen der Vertriebskomponenten dargestellt ist,
- Figur 2: ein Blockschaltbild eines Funktelefons, das mehrere Komponenten enthält,
- Figur 3: einen Ablaufplan, in dem Verfahrensschritte zum Entwickeln eines Produkts unter Berücksichtigung von festzulegenden Qualitätsmerkmalen des Produkts dargestellt sind, und
- Figur 4: das Blockschaltbild einer Datenverarbeitungsanlage, die mehrere Komponenten enthält.

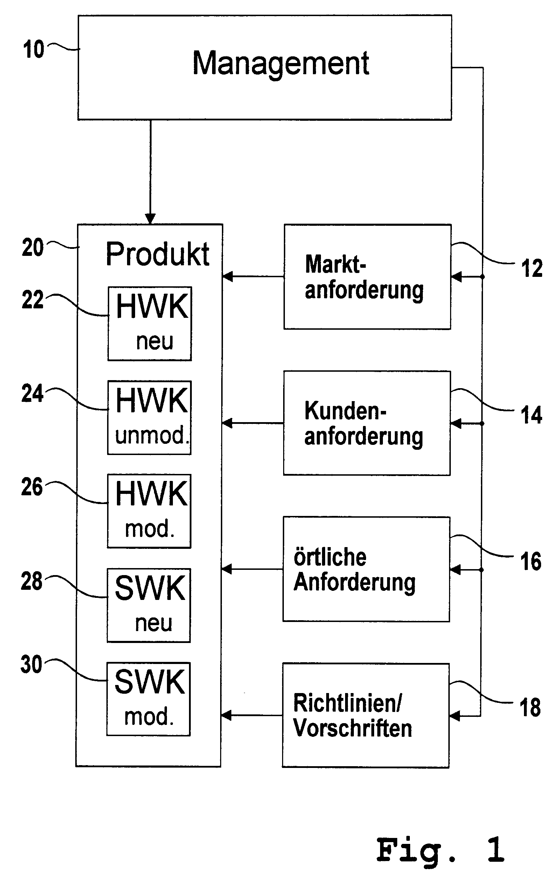

In Figur 1 ist ein Blockschaltbild dargestellt, das die zur Produktentwicklung wesentlichen Entscheidungskriterien zeigt. Eine Unternehmensleitung, mit Management 10 bezeichnet, trifft eine Entscheidung, ein bestimmtes Produkt 20 zu entwickeln. Bei dieser Entscheidung trifft das Management 10 auch die Entscheidung über Vertriebskennwerte, die insbesondere die Vertriebsregion und potentielle Kunden betreffen. Aus diesen Vertriebskennwerten resultieren Marktanforderungen 12, Kundenanforderungen 14, örtliche Anforderungen 16 sowie Richtlinien und Vorschriften 18, die bei der Entwicklung des Produkts 20 zu berücksichtigen sind. Für das zu entwickelnde Produkt 20 werden Hard- und Softwarekomponenten definiert. Dabei können neu zu entwickelnde Hardwarekomponenten 22, bereits vorhandene Hardwarekomponenten 24, vorhandene Hardwarekomponenten 26, die zum Einsatz in dem neu zu entwickelnden Produkt 20 angepasst werden müssen, neu zu entwickelnde Softwarekomponenten 28 und/oder Softwarekomponenten 30, die zum Einsatz in dem neu zu entwickelnden Produkt 20 angepasst werden müssen, definiert werden. Bei der Definition der Produktkomponenten 22, 24, 26, 28, 30 werden die quantifizierbaren Marktanforderungen 12 bei der Definition der Produktkomponenten 22, 24, 26, 28, 30 und beim Festlegen der Produkt-Qualitätskennwerte berücksichtigt.

Weiterhin werden die Kundenanforderungen 14 an das neu zu entwickelnde Produkt bei der Definition der Komponenten 22 bis 30 berücksichtigt. Diese Kundenanforderungen 14 können z.B. Vorschriften von möglichen Großkunden und/oder das Verbraucherverhalten, z.B. die Farbe, die Form und/oder Bediengewohnheiten möglicher Einzelkunden, in der jeweiligen Vertriebsregion betreffen. Auch sind die örtlichen Anforderungen 16 zu berücksichtigen, die z.B. die klimatischen Bedingungen und/oder die Erdbebenhäufigkeit sowie die möglichen Einsatzorte des zu entwickelnden Produkts 20 betreffen, die mögliche Kunden auswählen werden.

Auch werden bei der Definition der Komponenten 22, 24, 26, 28, 30 die in der jeweiligen Vertriebsregion geltenden Richtlinien und Vorschriften 18 berücksichtigt. Solche Richtlinien und Vorschriften 18 betreffen insbesondere Vorschriften, die in der jeweiligen Vertriebsregion durch gesetzliche Bestimmungen, wie z.B. Umweltschutzgesetze und Umweltschutzverordnungen, die Normen und Richtlinien für die Zulassung von Produkten, oder durch die anerkannten Regeln der Technik gelten. Die aus den Anforderungen 12, 14, 16, 18 resultierenden, notwendigen Produkt-Qualitätskennwerte muss das Produkt 20 erfüllen, um in der jeweiligen Vertriebsregion wie vorgesehen vertrieben werden zu können. Das Management 10 kann aber auch Produkt-Qualitätskennwerte für das zu entwickelnde Produkt 20 festlegen, die die aus den notwendigen Anforderungen 12, 14, 16, 18 resultierenden Produkt-Qualitätskennwerte übererfüllen, um z.B. ein qualitativ hochwertiges Produkt 20 zu entwickeln.

Bei der Definition der Komponenten 22 bis 30 wird auch mindestens ein möglicher Hersteller für jede einzelne Komponente 22 bis 30 festgelegt, wobei angestrebt wird, dass für eine Komponente mindestens zwei mögliche Hersteller vorhanden sind. Bei der Entscheidung über die möglichen Hersteller ist auch die wirtschaftliche Situation und/oder die Qualität von hergestellten Produkten des jeweiligen möglichen Herstellers zu berücksichtigen. Bei Vertragsverhandlungen mit möglichen Herstellern sollte ein Bewerten des jeweiligen möglichen Herstellers mit Hilfe eines Fragebogens durchgeführt werden, der auch Angaben über die festgelegten Produkt-Qualitätskennwerte enthält.

Der jeweilige mögliche Hersteller sollte auf diesem Fragebogen auch erklären, dass er die Möglichkeit zum Durchführen von Prüfungen hat, die die Einhaltung der festgelegten Produkt-Qualitätskennwerte ausreichend belegen und dass er diese Prüfungen bei einer Beauftragung durchführen wird. Auch sollte er seine Bereitschaft erklären, gegebenenfalls notwendige Modifikationen und erneute Prüfungen der Komponente 22 bis 30 durchzuführen. Vor oder bei Vertragsabschluss hat der mögliche Hersteller weiterhin zu erklären, dass er eine Dokumentation der ermittelten Komponenten-Qualitätskennwerte und/oder Produkt-Qualitätskennwerte an den Auftraggeber übergibt und dass er die Weitergabe der in der Dokumentation enthaltenen Daten an Dritte, z.B. an Endkunden, gestattet. Er benennt weiterhin mindestens einen Ansprechpartner, der beim Ermitteln von Produkt-Qualitätskennwerten zur Verfügung steht und die bei Bedarf das Ermitteln der Produkt-Qualitätskennwerte bei Nachprüfung und das Modifizieren der Komponente 22 bis 30 unterstützt.

Sind mehrere Hersteller zum Herstellen der Komponenten 22 bis 30 vorgesehen, so wird ein Hersteller festgelegt, der für die Einhaltung der festgelegten Produkt-Qualitätskennwerte verantwortlich ist. Die Hersteller der Komponenten 22 bis 30 haben dann untereinander abzustimmen, wie die festgelegten Produkt-Qualitätskennwerte erfüllt werden. Alle ermittelten Qualitätskennwerte sollten durch ein akkreditiertes Prüflabor bestätigt werden.

In Einzelfällen kann auf das Ermitteln der Produkt-Qualitätskennwerte unter Berücksichtigung der Einflüsse weiterer Komponenten 22 bis 30 verzichtet werden, wenn die einzelnen Komponenten 22 bis 30 die festgelegten Produkt-Qualitätskennwerte erfüllen und eine gegenseitige Beeinflussung der Komponenten 22 bis 30 nicht zu erwarten ist.

Es ist z.B. derzeit in Deutschland nicht erforderlich, von einer Datenverarbeitungsanlage, die einen Personalcomputer, einen Bildschirm, eine Tastatur und eine Computermaus enthält, die Produkt-Qualitätskennwerte der gesamten Datenverarbeitungsanlage zu ermitteln. In einem solchen Fall ist es ausreichend, wenn die einzelnen Komponenten, d.h. der Personalcomputer, der Bildschirm, die Tastatur und die Computermaus, jeweils die Produkt-Qualitätskennwerte erfüllen und dass die Komponenten-Qualitätskennwerte des Personalcomputers, des Bildschirms, der Tastatur und der Computermaus die festgelegten Produkt-Qualitätskennwerte der Datenverarbeitungsanlage erfüllen, wobei ein Überschreiten der Produkt-Qualitätskennwerte durch die Komponenten-Qualitätskennwerte auch bei einem bestimmungsgemäßen Gebrauch der Komponenten mit weiteren Komponenten der Datenverarbeitungsanlage nicht zu erwarten ist.

Die einzelnen Komponenten, wie der Personalcomputer, der Bildschirm, die Tastatur und die Computermaus können dabei jeweils aus mehreren Unterkomponenten bestehen. Ein Personalcomputer enthält z.B. ein Netzteil, ein Festplattenlaufwerk, ein Diskettenlaufwerk, ein CD-ROM-Laufwerk, eine Hauptplatine, eine zentrale Recheneinheit, Arbeitsspeicherbausteine, Bildschirmansteuerplatinen, sogenannte Soundkarten und Komponenten zur Datenfernübertragung. Auch ein Bildschirm enthält mehrere Unterkomponenten, wie z.B. ein Hochspannungsteil, ein Netzteil, eine Steuereinheit, eine Bildröhre, eine Eingabeeinheit, Software, die von der Steuereinheit abgearbeitet werden kann, sowie ein Gehäuse.

Beim Festlegen der Produkt-Qualitätskennwerte sollten Kennwerte zur CE-Kennzeichnung, zur UL-Zulassung, zur NEBS-Zulassung, landesspezifischen Norm, insbesondere zur Erdbebensicherheit, zur zulässigen Brandlast sowie zur EMV-Verträglichkeit, und/oder spezielle Kundenanforderungen an die Qualitätskennwerte berücksichtigt werden. Die sich für das Produkt aus den Komponenten-Qualitätskennwerten ergebenden und/oder die ermittelten Produkt-Qualitätskennwerte werden archiviert, und es werden Zertifikate über die Einhaltung der Produkt-Qualitätskennwerte erstellt.

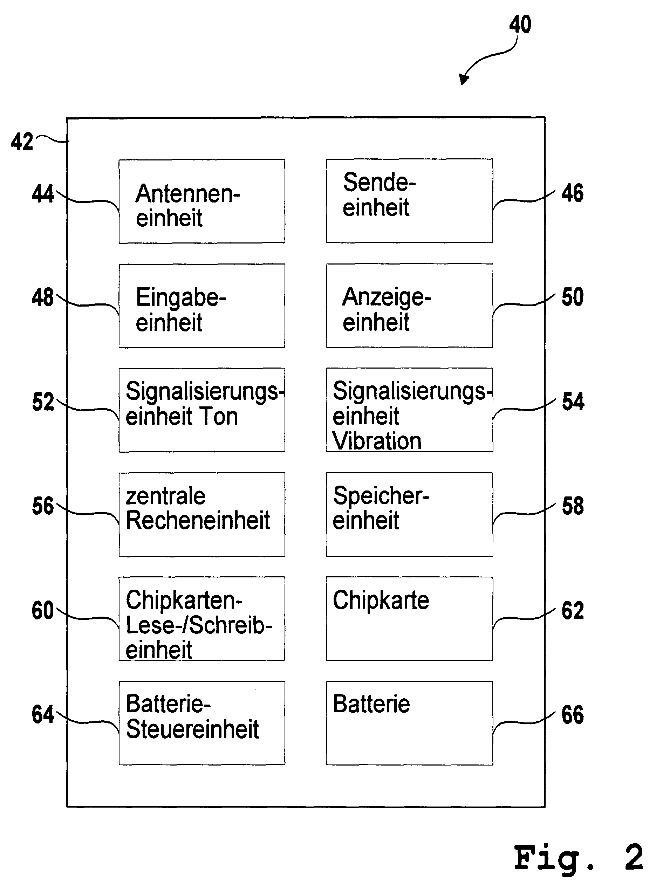

In Figur 2 ist ein Funktelefon 40 dargestellt, das mehrere Komponenten enthält. Das Funktelefon 40 enthält ein Gehäuse 42, eine Antenneneinheit 44, eine Sendeeinheit 46, eine Eingabeeinheit 48, eine Anzeigeeinheit 50, eine Tonsignalisierungseinheit 52, eine Vibrationssignalisierungseinheit 54, eine zentrale Recheneinheit 56, eine Speichereinheit 58, eine Chipkartenlese-/Schreibeinheit 60, eine Chipkarte 62, eine Batteriesteuereinheit 64 und eine Batterie 66. Das Funktelefon 40 ist dabei ein zu entwickelndes Produkt, wie das zu entwickelnde Produkt, das in Figur 1 mit 20 bezeichnet ist. Das Management 10 entscheidet, dass ein neues Funktelefon 40 zu entwickeln ist. Diese Entscheidung beinhaltet auch die vorgesehene Vertriebsregion für das Funktelefon 40.

Gemäß einer vorliegenden und/oder anzufertigenden Marktanalyse werden technischen Parameter und Funktionsparameter des Funktelefons 40 festgelegt. Eine solche Marktanalyse kann auch die Analyse der in dieser Vertriebsregion vertriebenen Konkurrenzprodukte beinhalten. Beim Festlegen der Funktionen und der technischen Parameter werden weitere Kundenanforderungen, wie z.B. Forderungen der in der Vertriebsregion tätigen Mobilfunknetzbetreiber berücksichtigt. Auch werden örtliche Anforderungen, wie z.B. klimatische und geografische Besonderheiten der vorgesehenen Vertriebsregion berücksichtigt. Weiterhin sind die gesetzlichen Vorschriften, insbesondere Vorschriften zur Abhörsicherheit, zu Notruffunktionen, zum Funkverkehr, die Fernmeldegesetze, die Umweltschutzgesetze und Richtlinien zur elektromagnetischen Verträglichkeit zu berücksichtigen. Mit Hilfe dieser Anforderungen werden Produkt-Qualitätskennwerte für das Funktelefon 40 festgelegt. Diese Produkt-Qualitätskennwerte berücksichtigen alle Anforderungen an das Funktelefon 40.

Soll das Funktelefon 40 z.B. in der Europäischen Union und in den USA vertrieben werden, so sind z.B. auch die unterschiedlichen Sende- und Empfangsfrequenzen sowie die unterschiedlichen Mobilfunkstandards zu berücksichtigen. Das Management 10 kann in einem solchen Fall entscheiden, ob das Funktelefon 40 so entwickelt werden soll, dass ein Senden und Empfangen von Telekommunikationsdaten auf allen in der vorgesehenen Vertriebsregion möglichen Frequenzen umschaltbar möglich sein soll oder ob für jede der möglichen Sende- und Empfangsfrequenzen eine Ausführungsform des Funktelefons 40 entwickelt werden soll. Die Anforderungen an das zu entwickelnde Funktelefon 40, die aus den Marktanforderungen 12, aus den Kundenanforderungen 14, aus den örtlichen Anforderungen 16 und aus den gesetzlichen Richtlinien und Vorschriften 18 resultieren, stellen somit Mindestanforderungen an das Funktelefon 40 dar. Auch sind solche gesetzlichen Richtlinien und Vorschriften zu beachten, die sich in Vorbereitung befinden.

Die vom Management 10 für das zu entwickelnde Funktelefon 40 festgelegten Produkt-Qualitätskennwerte können aber auch über die Mindestqualitätsanforderungen hinausgehen sowie weitere Produkt-Qualitätskennwerte beinhalten, wie z.B. die sich aus dem Energieverbrauch und der Batteriekapazität des Funktelefons 40 ergebende maximale Bereitschaftszeit und der sich daraus ebenfalls ergebenden maximalen möglichen Gesprächsdauer.

An Hand der festgelegten Eigenschaften und der festgelegten Produkt-Qualitätskennwerte werden Komponenten 42 bis 66 definiert, die in dem Funktelefon 40 enthalten sein sollen. Die Komponenten 42 bis 66 sind in diesem Ausführungsbeispiel Baugruppen des Funktelefons 40. Es wird überprüft, ob Komponenten, die bereits in anderen Produkten eingesetzt worden sind, wie z.B. die Chipkartenlese- und Schreibeinheit 60, die Anzeigeeinheit 50 oder die Eingabeeinheit 48, für das Funktelefon 40 unmodifiziert übernommen werden können. Weiterhin werden neu zu entwickelnde Komponenten 42 bis 66 oder zu modifizierende Komponenten 42 bis 66 festgelegt. Diese Komponenten 42 bis 66 können Hard- und/oder Softwarekomponenten umfassen. Die Herstellerauswahl und die Überprüfung der Komponenten-Qualitätskennwerte erfolgt wie in der Beschreibung zu Figur 1 bereits beschrieben.

Werden einzelne Komponenten 42 bis 66 des Funktelefons 40 neu entwickelt oder modifiziert, so werden von diesen Komponenten 42 bis 66 Komponenten-Qualitätskennwerte unter Berücksichtigung der weiteren Komponenten 42 bis 66 des Funktelefons 40 ermittelt. Diese ermittelten Komponenten-Qualitätskennwerte werden mit den festgelegten Produkt-Qualitätskennwerten verglichen. Erfüllen die Komponenten-Qualitätskennwerte nicht die festgelegten Produkt-Qualitätskennwerte, so werden diese Komponenten 42 bis 66 modifiziert und nach der Modifizierung modifizierte Komponenten-Qualitätskennwerte ermittelt. Diese aktuellen modifizierten Komponenten-Qualitätskennwerte werden wiederum mit den festgelegten Produkt-Qualitätskennwerten verglichen. Die Modifizierung, das Ermitteln der modifizierten Komponenten-Qualitätskennwerte und das Vergleichen der modifizierten Qualitätskennwerte mit den festgelegten Produkt-Qualitätskennwerten wird so lange wiederholt, bis die Produkt-Qualitätskennwerte mindestens erreicht sind.

Erfüllen die einzelnen Komponenten 42 bis 66 die Anforderungen der festgelegten Produkt-Qualitätskennwerte, so werden diese Komponenten 42 bis 66 zu dem Funktelefon 40 zusammengefügt. Von diesem Funktelefon 40 werden dann die aktuellen Produkt-Qualitätskennwerte ermittelt, die wiederum mit den bei der Planung zuvor festgelegten Produkt-Qualitätskennwerten verglichen werden. Erfüllen die ermittelten aktuellen Produkt-Qualitätskennwerte des Funktelefons 40 nicht die festgelegten Produkt-Qualitätskennwerte, so wird mindestens eine der Komponenten 42 bis 66 modifiziert. Anschließend werden die modifizierten Produkt-Qualitätskennwerte des Funktelefons 40 ermittelt und wiederum mit den festgelegten Produkt-Qualitätskennwerten verglichen. Die Produkt-Qualitätskennwerte stellen Sollwerte dar und die aktuellen ermittelten Komponenten- und/oder Produkt-Qualitätskennwerte Istwerte. Mit Hilfe des Verfahrens gemäß Patentanspruch 1 wird ein Sollwert-Istwert-Vergleich nach Art eines Regelkreises durchgeführt. Die Modifikation der jeweiligen Komponente 42 bis 66 bzw. der Komponenten ist die Stellgröße des Regelkreises. Die Regelung wird solange durchgeführt, bis die Istwerte die Sollwerte mindestens erreicht haben.

Das Modifizieren und erneute Ermitteln der Produkt-Qualitätskennwerte des Funktelefons 40 wird so lange wiederholt, bis die festgelegten Produkt-Qualitätskennwerte mindestens erreicht sind. Durch das Einhalten der Produkt-Qualitätskennwerte ist gewährleistet, dass beim Vertrieb des Funktelefons 40 in der jeweiligen Vertriebsregion keine Verstöße gegen geltende Vorschriften auftreten, die ein kostenintensives Nachbessern von bereits produzierten Funktelefonen 40 zur Folge haben. Weiterhin wird gewährleistet, dass durch die Berücksichtigung der Marktanforderungen 12 und der örtlichen Anforderungen 16 ein qualitativ hochwertiges Funktelefon 40 entwickelt wird, das auch den spezifischen Anforderungen der jeweiligen Vertriebsregion entspricht und somit gute Voraussetzungen für einen erfolgreichen Absatz hat.

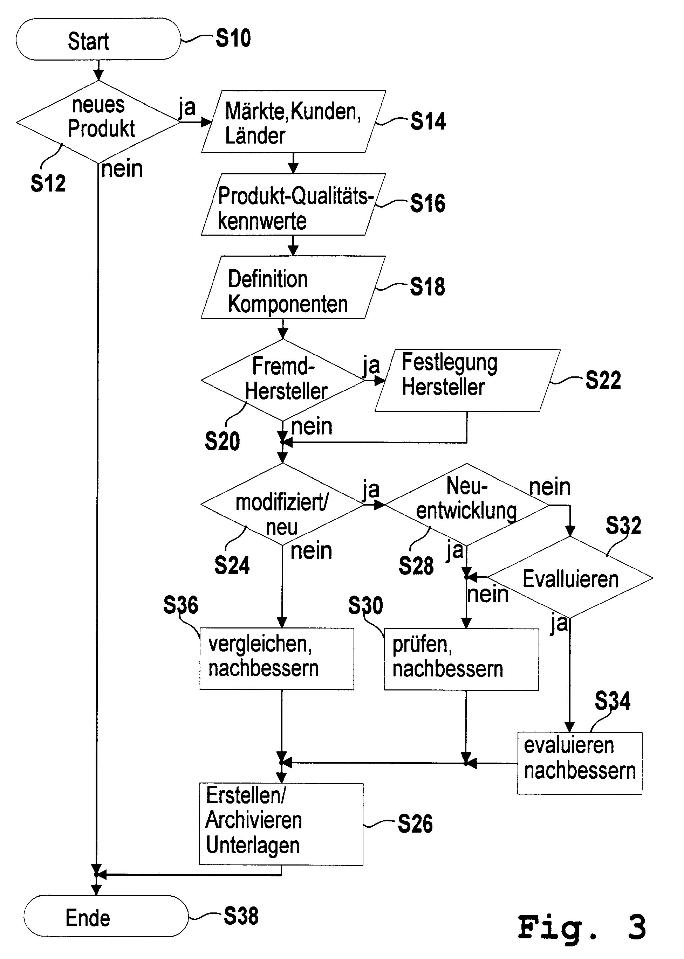

In Figur 3 ist ein Signalflussplan eines Verfahrens zum Entwickeln eines Produkts 20 unter Berücksichtigung von festzulegenden Qualitätsmerkmalen des Produkts 20 dargestellt. Im Schritt S10 wird das Verfahren gestartet. Im Schritt S12 wird überprüft, ob eine Entscheidung, z.B. vom Management 10, vorliegt, eine neues Produkt 20, z.B. ein Funktelefon 40, herzustellen. Liegt eine solche Entscheidung vor, so wird im Schritt S14 Vertriebskennwerte für das Produkt 20 definiert, die Angaben zu den vorgesehenen Vertriebsregionen, zu den vorgesehenen Märkten, zu den vorgesehenen Kunden, insbesondere zu den vorgesehenen Vertriebsländern, berücksichtigen. Anschließend werden in Schritt S16 die Produkt-Qualitätskennwerte für das zu entwickelnde Produkt 20 festgelegt. Beim Festlegen der Produkt-Qualitätskennwerte werden die Anforderungen, die sich aus den im Schritt S14 festgelegten Vertriebskennwerten ergeben, berücksichtigt. Insbesondere werden Kundenanforderungen 14, örtliche Anforderungen 16 und geltende Richtlinien und Vorschriften 18 berücksichtigt.

Im Schritt S18 werden anschließend die Komponenten 22 bis 30 definiert, die in dem Produkt 20 enthalten sein sollen. Anschließend wird im Schritt S20 für jede Komponente 22 bis 30 überprüft, ob diese Komponente 22 bis 30 von einem Fremdhersteller hergestellt werden soll. Ist das der Fall, so wird im Schritt S22 für jede Komponente 22 bis 30 mindestens ein möglicher Hersteller festgelegt. Die Herstellerauswahl erfolgt mit Hilfe eines sogenannten Audits mit Kriterien, die bereits in den Ausführungen zu Figur 1 beschrieben worden sind. Mit Hilfe eines solchen Audits wird die Leistungsfähigkeit und die Eignung des Herstellers zum Herstellen der jeweiligen Komponente 22 bis 30 qualitativ beurteilt. Ein solches Audit kann z.B. mit Hilfe eines Fragebogens erfolgen, auf dem der jeweilige mögliche Hersteller geeignete rechtsverbindliche Angaben machen muss und der, z.B. im Falle einer Beauftragung, Vertragsbestandteil wird.

Anschließend wird im Schritt S24 für jede Komponente 22 bis 30 überprüft, ob diese Komponente 22 bis 30 neu entwickelt oder ob eine bestehende Komponente 22 bis 30 modifiziert werden muss. Die Überprüfung im Schritt S24 wird auch durchgeführt, wenn im Schritt S20 festgelegt wurde, dass die jeweilige Komponente 22 bis 30 nicht von einem Fremdhersteller hergestellt wird, sondern im eigenen Unternehmen.

Bei anderen Ausführungsbeispielen kann bei einer Entscheidung, ob die jeweilige Komponente 22 bis 30 von einem Fremdhersteller oder vom eigenen Unternehmen hergestellt werden soll, auch das eigene Unternehmen mit Hilfe des Audits bewertet werden, wobei an Hand der Ergebnisse des Audits die Entscheidung getroffen wird, ob die jeweilige Komponente 22 bis 30 im eigenen Unternehmen oder von einem Fremdhersteller hergestellt wird.

Wird im Schritt S24 festgestellt, dass die jeweilige Komponente 22 bis 30 nicht neu zu entwickeln und nicht zu modifizieren ist, d.h. dass die jeweilige Komponente 22 bis 30 bereits vorhanden ist und unmodifiziert für das Produkt 20 übernommen werden kann, so wird anschließend im Schritt S36 überprüft, ob die vorhandenen Komponenten-Qualitätskennwerte auch bei einer Kombination dieser Komponente 22 bis 30 mit weiteren Komponenten 22 bis 30 die festgelegten Produkt-Qualitätskennwerte erfüllen.

Erfüllen die Komponenten-Qualitätskennwerte die festgelegten Produkt-Qualitätskennwerte nicht, so wird diese Komponente 22 bis 30 modifiziert und es werden anschließend modifizierte aktuelle Komponenten-Qualitätskennwerte ermittelt. Die ermittelten aktuellen modifizierten Komponenten-Qualitätskennwerte werden mit den festgelegten Produkt-Qualitätskennwerten verglichen, wobei die Komponente 22 bis 30 solange modifiziert wird bis die Komponenten-Qualitätskennwerte die festgelegten Produkt-Qualitätskennwerte erfüllen. Ist das der Fall, so werden im anschließenden Schritt S26 die Ergebnisse, d.h. die ermittelten aktuellen Komponenten-Qualitätskennwerte und/oder die ermittelten aktuellen Produkt-Qualitätskennwerte, dokumentiert. Die Produkt-Qualitätskennwerte stellen Sollwerte dar und die aktuellen ermittelten Komponenten- und/oder Produkt-Qualitätskennwerte Istwerte. Mit den aktuellen ermittelten Komponenten- bzw. den Produkt-Qualitätskennwerten und den festgelegten Produkt-Qualitätskennwerten wird ein Sollwert-Istwert-Vergleich nach Art eines Regelkreises durchgeführt. Die Modifikation der jeweiligen Komponente bzw. der Komponenten ist die Stellgröße des Regelkreises. Die Regelung wird solange durchgeführt, bis alle Istwerte die Sollwerte mindestens erreicht haben.

Wird im Schritt S24 jedoch festgestellt, dass die jeweilige Komponente 22 bis 30 neu zu entwickeln oder zu modifizieren ist, so wird anschließend im Schritt S28 überprüft, ob die Komponente 22 bis 30 neu zu entwickeln ist. Ist das der Fall, so werden anschließend im Schritt S30 die Komponenten-Qualitätskennwerte der neu entwickelten Komponente 22 bis 30 ermittelt und mit den festgelegten Produkt-Qualitätskennwerten verglichen, wobei Auswirkungen der Kombination dieser Komponente 22 bis 30 mit den weiteren Komponenten 22 bis 30 des Produkts 20 berücksichtigt werden. Werden die festgelegten Produkt-Qualitätskennwerte durch die aktuellen Komponenten-Qualitätskennwerte nicht erreicht, so wird die jeweilige Komponente 22 bis 30 nachgebessert und erneut geprüft. Das Nachbessern und Überprüfen wird so lange wiederholt, bis alle festgelegten Produkt-Qualitätskennwerte durch die aktuellen modifizierten Komponenten-Qualitätskennwerte mindestens erreicht sind. Anschließend werden im Schritt S26 die gegebenenfalls modifizierten Komponenten-Qualitätskennwerte und/oder die sich ergebenden Produkt-Qualitätskennwerte dokumentiert und archiviert.

Wird im Schritt S28 festgestellt, dass die jeweilige Komponente 22 bis 30 keine Neuentwicklung ist, so wird im Schritt S32 überprüft, ob aus den Komponenten-Qualitätskennwerten der ursprünglichen Komponente die relevanten Produkt-Qualitätskennwerte hergeleitet werden können. Ist das der Fall, so werden im Schritt S34 die Komponenten-Qualitätskennwerte der modifizierten Komponente 22 bis 30 aus den Komponenten-Qualitätskennwerten der ursprünglichen Komponente unter Berücksichtigung der Einflüsse der weiteren Komponenten 22 bis 30 ermittelt sowie anschließend im Schritt S26 dokumentiert und archiviert.

Wird im Schritt S32 jedoch festgestellt, dass das Herleiten der Komponenten-Qualitätskennwerte der modifizierten Komponente 22 bis 30 aus den Komponenten-Qualitätskennwerten der ursprünglichen Komponente nicht möglich ist, so werden die Komponenten-Qualitätskennwerte der modifizierten Komponente 22 bis 30 im Schritt S30 ermittelt und mit den bei der Planung zuvor festgelegten Produkt-Qualitätskennwerten verglichen. Werden die festgelegten Produkt-Qualitätskennwerte durch die ermittelten Komponenten-Qualitätskennwerte nicht mindestens erreicht, so wird die jeweilige Komponente 22 bis 30 nachgebessert und modifizierte Komponenten-Qualitätskennwerte ermittelt. Dieser Vorgang wird so lange wiederholt, bis die Komponenten-Qualitätskennwerte die festgelegten Produkt-Qualitätskennwerte erreicht haben. Anschließend werden im Schritt S26 die ermittelten und gegebenenfalls modifizierten Komponenten-Qualitätskennwerte sowie die sich aus den Komponenten-Qualitätskennwerten ergebenden Produkt-Qualitätskennwerte dokumentiert und archiviert. Ist die Überprüfung aller Komponenten 22 bis 30 des Produkts 20 abgeschlossen, so wird weiterhin im Schritt S26 ein Zertifikat über das Einhalten der jeweiligen Qualitätsanforderungen ausgestellt. Anschließend ist das Verfahren im Schritt S38 beendet. Das Verfahren ist ebenfalls im Schritt S38 beendet, wenn im Schritt S12 festgelegt wurde, dass kein neues Produkt entwickelt werden soll.

Die Komponenten-Qualitätskennwerte und/oder die Produkt-Qualitätskennwerte sollten von einem akkreditierten Prüflabor ermittelt werden. Für eine neu entwickelte oder modifizierte Komponente 22 bis 30 kann der Hersteller der Komponente 22 bis 30 die Komponenten-Qualitätskennwerte auch in einem nicht akkreditierten Prüflabor ermitteln. Nachdem die jeweilige Komponente 22 bis 30 die festgelegten Produkt-Qualitätskennwerte erfüllt, sollten die ermittelten Komponenten-Qualitätskennwerte jedoch durch ein akkreditiertes Prüflabor bestätigt werden.

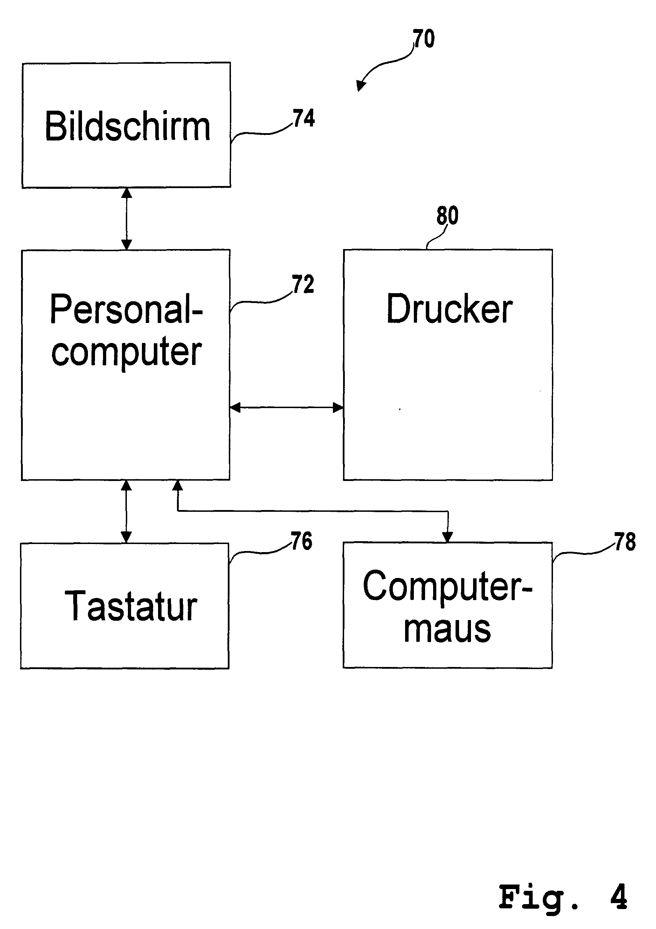

In Figur 4 ist eine Datenverarbeitungsanlage 70 dargestellt, die Komponenten 72 bis 80 enthält. Die Datenverarbeitungsanlage 70 hat einen Personalcomputer 72, der mit Hilfe nicht dargestellten Datenleitungen mit einem Bildschirm 74, einer Tastatur 76, einer Computermaus 78 und mit einem Drucker 80 verbunden ist. In diesem Ausführungsbeispiel liegt für jede der Komponenten 72 bis 80 der Datenverarbeitungsanlage 70 ein Nachweis über die Einhaltung der für die Datenverarbeitungsanlage 70 festgelegten Produkt-Qualitätskennwerte vor. Für Produkte, wie die Datenverarbeitungsanlage 70, ist in den meisten Vertriebsregionen, wie z.B. auch in Deutschland, das Ermitteln der Produkt-Qualitätskennwerte der Datenverarbeitungsanlage 70 nicht notwendig. Mit Hilfe der Komponenten-Qualitätskennwerten der Komponenten 72 bis 80 kann der Hersteller der Datenverarbeitungsanlage 70 Zertifikate über die Einhaltung der festgelegten Produkt-Qualitätskennwerte für die Datenverarbeitungsanlage 70 ausstellen.

## Patentansprüche

1. Verfahren zum Entwickeln eines Produkts unter Berücksichtigung von festzulegenden Qualitätsmerkmalen des Produkts, bei dem für das zu entwickelnde Produkt (20) Vertriebs-Kennwerte, die zumindest die vorgesehene Vertriebsregion betreffen, festgelegt werden,
die durch das Produkt (20) zu erfüllenden Produkt-Qualitätskennwerte festgelegt werden, wobei die sich aus den Vertriebs-Kennwerten ergebenden Vorschriften und Richtlinien berücksichtigt werden,
mindestens zwei Komponenten (22 bis 30) für das Produkt (20) definiert werden, die in dem Produkt (20) enthalten sein sollen,
in einem Prüfvorgang für jede Komponente (22 bis 30) überprüft wird, ob mit den für diese Komponente (22 bis 30) ermittelten Komponenten-Qualitätskennwerten die festgelegten Produkt-Qualitätskennwerte auch bei einer Kombination dieser Komponente (22 bis 30) mit der weiteren Komponente (22 bis 30) erreicht werden, und
bei dem bei einem negativen Prüfergebnis die Komponente (22 bis 30) modifiziert wird und der Prüfvorgang wiederholt wird, wobei als Komponenten-Qualitätskennwerte die modifizierten Komponenten-Qualitätskennwerte verwendet werden.

2. Verfahren nach Anspruch 1, **dadurch gekennzeichnet, dass** aus den gegebenenfalls modifizierten Komponenten-Qualitätskennwerten unter Anwendung eines Auswertungsverfahrens die Produkt-Qualitätskennwerte ermittelt werden, wobei als Auswertungsverfahren vorzugsweise empirische Schätzverfahren, mathematische Modelle und Simulationsverfahren verwendet werden.

3. Verfahren nach einem der vorhergehenden Ansprüche, **dadurch gekennzeichnet, dass** die aktuellen Produkt-Qualitätskennwerte durch direktes Messen und/oder Prüfen am Produkt ermittelt werden.

4. Verfahren nach einem der vorhergehenden Ansprüche, **dadurch gekennzeichnet, dass** die Komponenten Hardwarekomponenten (22, 24, 26) und/oder Softwarekomponenten (28, 30) sind.

5. Verfahren nach einem der vorhergehenden Ansprüche, **dadurch gekennzeichnet, dass** bei der Definition der Komponenten (22 bis 30) auch Qualitätskenngrößen möglicher Hersteller der einzelnen Komponenten (22 bis 30) berücksichtigt werden.

6. Verfahren nach Anspruch 5, **dadurch gekennzeichnet, dass** zur Feststellung der Qualitätskenngrößen eines Herstellers die Leistungsfähigkeit, die wirtschaftliche Situation und/oder die Qualität von hergestellten Produkten bewertet werden.

7. Verfahren nach Anspruch 6, **dadurch gekennzeichnet, dass** das Bewerten mit Hilfe eines Fragebogens durchgeführt wird, der auch Angaben über die festgelegten Produkt-Qualitätskennwerte enthält, dass ferner berücksichtigt wird, inwiefern Möglichkeiten für Prüfungen vorhanden sind, die die Einhaltung der festgelegten Produkt-Qualitätskennwerte ausreichend belegen.

8. Verfahren nach einem der Ansprüche 5 bis 7, **dadurch gekennzeichnet, dass** ein möglicher Hersteller seine Bereitschaft erklärt, bei einer Beauftragung Prüfungen und gegebenenfalls notwendige Modifikationen der Komponente zum Erfüllen der Produkt-Qualitätskennwerte durchzuführen.

9. Verfahren nach Anspruch 8, **dadurch gekennzeichnet, dass** der Hersteller eine Dokumentation der ermittelten Komponenten-Qualitätskennwerte und/oder Produkt-Qualitätskennwerte an den Auftraggeber übergibt und die Weitergabe an Dritte, insbesondere an Endkunden, gestattet.

10. Verfahren nach einem der Ansprüche 5 bis 9, **dadurch gekennzeichnet, dass** der mögliche Hersteller der Komponente (22 bis 30) mindestens einen Ansprechpartner benennt, der beim Ermitteln von Produkt-Qualitätskennwerten zur Verfügung steht und die bei Bedarf das Ermitteln der Produkt-Qualitätskennwerte bei Nachprüfungen und das Modifizieren der Komponente (22 bis 30) zumindest unterstützt.

11. Verfahren nach einem der Ansprüche 1 bis 10, **dadurch gekennzeichnet, dass** bei der Definition der Komponenten (22 bis 30) und/oder beim Festlegen der möglichen Hersteller berücksichtigt wird, dass mindestens zwei Hersteller vorhanden sind, die die jeweilige Komponente (22 bis 30) herstellen können.

12. Verfahren nach einem der vorhergehenden Ansprüche, **dadurch gekennzeichnet, dass** das Produkt (20) Komponenten (22 bis 30) enthält, die von mindestens zwei Herstellern hergestellt worden sind, und dass ein Hersteller festgelegt wird, der für die Einhaltung der festgelegten Produkt-Qualitätskennwerte verantwortlich ist.

13. Verfahren nach einem der vorhergehenden Ansprüche, **dadurch gekennzeichnet, dass** alle ermittelten Qualitäts-Kennwerte durch ein akkreditiertes Prüflabor bestätigt werden.

14. Verfahren nach einem der vorhergehenden Ansprüche, **dadurch gekennzeichnet, dass** die Einhaltung der festgelegten Produkt-Qualitätskennwerte und/oder die Einhaltung von Komponenten-Qualitätskennwerten, die sich für die jeweilige Komponente aus den Produkt-Qualitätskennwerten ergeben, vertraglich mit den Herstellern der jeweiligen Komponente (22 bis 30) vereinbart ist.

15. Verfahren nach einem der vorhergehenden Ansprüche, **dadurch gekennzeichnet, dass** die Produkt-Qualitätskennwerte durch direkte Messung und/oder Prüfung dann nicht ermittelt werden, wenn sowohl die einzelnen Komponenten (72 bis 78) die festgelegten Produkt-Qualitätskennwerte erfüllen, als auch eine gegenseitige Beeinflussung der Komponenten (72 bis 78) nicht zu erwarten ist.

16. Verfahren nach einem der vorhergehenden Ansprüche, **dadurch gekennzeichnet, dass** die Vertriebskennwerte den Zielmarkt, beabsichtigte Vertriebsländer und/oder mögliche Kunden berücksichtigen.

17. Verfahren nach einem der vorhergehenden Ansprüche, **dadurch gekennzeichnet, dass** eine Komponente (22 bis 30), insbesondere eine Baugruppe, mehrere Unterkomponenten enthält.

18. Verfahren nach einem der vorhergehenden Ansprüche, **dadurch gekennzeichnet, dass** beim Festlegen der Qualitäts-Kennwerte Kennwerte zur CE- Kennzeichnung, zur UL-Zulassung, zur NEBS- Zulassung, landesspezifische Normen, insbesondere zur Erdbebensicherheit, zur zulässigen Brandlast sowie zur elektromagnetischen Verträglichkeit, und/oder spezielle Kundenanforderungen (14) an Qualitäts-Kennwerte berücksichtigt werden.

19. Verfahren nach einem der vorhergehenden Ansprüche, **dadurch gekennzeichnet, dass** die sich für das Produkt aus den Komponenten-Qualitätskennwerten ergebenden und/oder die ermittelten Produkt-Qualitätskennwerte archiviert und/oder Zertifikate über die Einhaltung der Produkt-Qualitätskennwerte erstellt werden.
